# EUROPÄISCHE PATENTANMELDUNG

(11) **EP 2 112 746 A1**
(43) Veröffentlichungstag der Anmeldung: **28.10.2009**
(21) Anmeldenummer: 08007796.9
(22) Anmeldetag: 22.04.2008
(51) Int. Cl.: H02K 3/24

(54) **Dynamoelektrische Maschine**

(71) Anmelder: SIEMENS AKTIENGESELLSCHAFT, 80333 München (DE)
(72) Erfinder: Amedick, Volker, 47198 Duisburg (DE); Blinn, Axel, 45131 Essen (DE); Cravero, Leandro, 45479 Mülheim an der Ruhr (DE); Dahlke, Stefan, 45481 Mülheim an der Ruhr (DE); Evers, Christoph, 45721 Haltern am See (DE); Langmann, Axel, 58642 Iserlohn (DE); Völker, Stefan, 47447 Moers (DE)

(57) **Zusammenfassung**

Die Erfindung betrifft einen Rotor (1) für eine dynamoelektrische Maschine, wobei der Rotor (1) Kühlkanäle (11) aufweist, durch die ein Kühlmedium strömt, wobei die Wärmeübertragung des Kühlmediums auf eine Kühlkanalwand (12) des Kühlkanals (11) verbessert wird, indem Strömungsmittel (21), die als Vorsprünge oder als Dimpels ausgebildet sind, angeordnet werden.

## Beschreibung

Die Erfindung betrifft einen Rotor für eine dynamoelektrische Maschine, wobei der Rotor Kühlkanäle aufweist.

Unter einer dynamoelektrischen Maschine wird beispielsweise ein elektrischer Generator verstanden, der im Betrieb sehr stark erwärmt wird, so dass dieser gekühlt werden muss.

Unter einer dynamoelektrischen Maschine im Sinne der vorliegenden Anmeldung wird jeder Energiewandler verstanden, der elektrische in mechanische Energie oder mechanische in elektrische Energie umwandelt. Insbesondere ist unter einer dynamoelektrischen Maschine ein Generator zur elektrischen Energieversorgung zu verstehen.

Ein Generator als Ausführungsform einer elektrischen Maschine besteht unter anderem aus elektrisch aktiven Teilen, zu denen ein Stator und ein drehbar gelagerter Rotor gehören. Der Stator umfasst mehrere aufeinander geschichtete Segmentplatten, die auch als Segmentbleche oder Eisenbleche bezeichnet werden. Die Segmentbleche sind mit Nuten zur Aufnahme von Wicklungen versehen. Eine hohe Magnetisierbarkeit und kleine Hysterese- oder Wirbelstromverluste der Segmentbleche sind von Vorteil. Durch dünne Papier-, Lack- oder Oxidschichten werden die Segmentbleche gegeneinander isoliert. Ein komplett ausgebildeter Stator besteht aus vielen Segmentblechen. Das Gebilde der aufeinander gestapelten Segmentbleche wird auch als Blechpaket bezeichnet.

Um die Erwärmung des Generators zu begrenzen, müssen der Stator und der Läufer gekühlt werden. Es gibt im Wesentlichen drei wichtige Arten der Kühlung: Frischluftkühlung: über ein Gebläse wird Frischluft angesaugt, durch entsprechende Filter gereinigt und in den Generator eingeblasen. Geschlossener Kreislauf: die gereinigte Luft wird in einem geschlossenen Kreislauf durch den Generator geblasen und in Wärmetauschern durch Kühlwasser wieder abgekühlt. Die Abwärme kann auch zu Heizzwecken verwendet werden. Reinwasserkühlung: bei Generatoren mit großer Leistung wird eigens aufbereitetes Wasser durch den Generator in einen geschlossenen Kreislauf geleitet. Wasserstoffkühlung: der in einem Kreislauf bewegte gasförmige Wasserstoff gibt über die an den Seiten der Generatoren angebrachte Wasserkühler die Verlustwärme ab. Das Gehäuse der Generatoren muss dabei gasdicht und druckfest ausgeführt sein, um einer eventuellen Knallgasexplosion standhalten zu können. Die Verwendung von Wasserstoffgas anstelle der Luft bewirkt geringere Gasreibungsverluste und doppeltes Wärmeabfuhrvermögen.

Es ist seit langem allgemein bekannt, die Verlustwärme in Generatoren mittels Kühlgas abzuführen. Hierbei wurde ursprünglich als Kühlgas Luft vorgesehen. Allerdings sind luftgekühlte Generatoren nur für niedrige Leistungen bis max. 300 MVA vorgesehen, da die mit Luft erzielbare Kühlwirkung zwangsläufig begrenzt ist und daher bei höheren Leistungen mit Luft nicht die erforderliche Kühlung gewährleistet ist.

Für Generatoren höherer Leistung wird als Kühlmedium bevorzugt Wasserstoffgas (H₂) eingesetzt, welches gegenüber Luft eine deutlich höhere Kühlleistung ermöglicht, die erhöht werden kann, indem man das Wasserstoffgas unter Druck setzt und die Kühlung unter Überdruck durchführt. Da Wasserstoff eine höhere Wärmekapazität und eine höhere Wärmeleitfähigkeit als Luft aufweist, kann durch die Füllung des Generatorgehäuses mit Wasserstoff die Wärme besser vom Generator abgeleitet werden, als dies mit Luft möglich wäre. Allerdings erfordert die Kühlung mit Wasserstoffgas einen zusätzlichen, nicht unbeträchtlichen Aufwand, der sich sowohl bei der Anschaffung als auch später im Betrieb kostenmäßig auswirkt.

Ein Begleitproblem bei der Generatorkühlung mit Wasserstoffgas sind die praktisch unvermeidbaren Verluste an Wasserstoffgas, hauptsächlich infolge von Leckagen an der Wellendurchführung der Rotorwelle durch das Gehäuse des Generators. Um diese Verluste zu verhindern oder zumindest niedrig zu halten, sind die Wellendurchführungen jeweils mit einer Wellendichtung versehen, die als Ölbad-Abdichtung ausgebildet sind. Ein weiteres Problem ist die Feuchtigkeit des Wasserstoffkühlgases. Während einer Inbetriebnahme oder während einer Revision sind in der Regel die Isolationsbauteile des Generators der Luftatmosphäre ausgesetzt. Das führt dazu, dass Feuchtigkeit aus der Luft von den Isolationsbauteilen aufgenommen wird. Während des Betriebs des Generators unter Wasserstoffkühlgas-Atmosphäre wird durch die in den Isolationsbauteilen angesammelte Luftfeuchtigkeit an den Wasserstoff abgegeben.

Bei luftgekühlten Generatoren zirkuliert die Luft im Generatorgehäuse und durch die Spulen im Stator. Die Ventilatoren sind direkt auf dem Rotor aufgebracht. Das Kühlgas strömt in der Regel über eine Leitvorrichtung, die auch als Kompressordiffusor bezeichnet werden kann, aus einer im Wesentlichen radialen Richtung in den Generator hinein, wobei der Kompressordiffusor dem Stator zugeordnet werden kann und daher kein drehbares Bauteil ist. Das Kühlgas wird anschließend über ein auf dem Rotor angeordnetes Kompressorlaufrad umgelenkt und ggf. verdichtet, wodurch ein Kühlgas mit optimalen physikalischen Parametern zur Kühlung des Rotors erreicht wird. Die zur Verfügung stehenden Strömungsquerschnitte für das Kühlgas im Kompressordiffusor als auch im Kompressorlaufrad sind in Strömungsrichtung aufeinander angepasst. Allerdings kann im Betrieb eine Kraft auf den Rotor wirken, die dazu führt, dass der Rotor in einer axialen Richtung verschoben wird. Bei einem Einsatz des Generators im Rahmen eines Turbosatzes rührt die Kraft von dem Turbinenschub der Dampfturbine bzw. der Gasturbine. Das Verschieben des auf den Rotor befindlichen Kompressorlaufrades gegenüber dem Kompressordiffusor führt allerdings dazu, dass die Strömungsquerschnitte gegeneinander versetzt sind, so dass keine optimalen Strömungsverhältnisse für das Kühlgas vorherrschen.

Bekannt ist es, Kühlkanäle in den elektrischen Leitern anzuordnen, die dann mit einem Kühlmedium durchströmt werden. Allerdings ist die Wärmeübertragung des Kühlmediums auf den elektrischen Leiter teilweise nicht zufriedenstellend, da die zulässigen Temperaturen, insbesondere im Wickelkopfbereich, einen vorgegebenen Grenzwert überschreiten können. Mit dieser Erfindung soll der Wärmeübergang des Kühlmediums auf das zu kühlende Bauteil verbessert werden.

Gelöst wird diese Aufgabe durch einen Rotor für eine dynamoelektrische Maschine, wobei der Rotor Kühlkanäle aufweist, wobei im Kühlkanal Strömungsmittel zur Erhöhung der Wärmeübertragung eines im Betrieb durch den Kühlkanal strömenden Kühlmediums auf den Kühlkanal aufweist.

Somit sind erfindungsgemäß Strömungsmittel vorgesehen, die speziell zur Erhöhung der Wärmeübertragung des Kühlmediums auf den Kühlkanal ausgebildet sind. Es ist allgemein bekannt, dass eine vergleichsweise schnelle Strömung des Kühlmediums im Kühlkanal zu einem geringen Wärmeübertragungskoeffizienten auf das zu kühlende Bauteil bewirkt. Ein Verwirbeln des Kühlmediums im Kühlkanal würde bereits eine Verbesserung der Wärmeübertragung auf das zu kühlende Bauteil erreichen. Die vorgeschlagenen Strömungsmittel sind daher derart ausgebildet, dass sie zu einer Verwirbelung des Kühlmediums bzw. zu einer Erhöhung der Turbulenzen in der Strömung des Kühlmediums führen, was zu einer Erhöhung der Wärmeübertragung führt.

Vorteilhafte Weiterbildungen sind in den Unteransprüchen angegeben.

So ist es vorteilhaft, wenn der Kühlkanal durch Kühlkanalwände begrenzt wird und die Strömungsmittel an einer Kühlkanalwand angeordnet sind. Die Strömungsmittel können somit fertigungstechnisch einfach und günstig in den Kühlkanal angeordnet werden.

Vorteilhafterweise wird der erfindungsgemäß verbesserte Kühlkanal zum Kühlen des Wickelkopfes angewendet. Da der Wickelkopf thermisch vergleichsweise stark beansprucht wird und daher im Betrieb die zulässigen Grenztemperaturen überschreiten könnte, ist es vorteilhaft, wenn der Wickelkopf gezielt gekühlt wird.

In einer vorteilhaften Weiterbildung weist der Kühlkanal einen ersten sich in axialer Richtung erstreckenden Axialleiterkühlkanal und einen zweiten sich in Umfangsrichtung erstreckenden Querleiterkühlkanal auf. Somit wird erreicht, dass das Kühlmedium durch mehrere Kühlkanäle strömt, was zu einer Vergrößerung der Kühlfläche führt, die durch die Bewandung der Kühlkanäle gebildet wird. Dadurch erhöht sich insgesamt die Wärmeübertragung auf das zu kühlende Bauteil.

In einer weiteren vorteilhaften Weiterbildung sind Umlenkungselemente im Kühlkanal angeordnet. Diese Umlenkungselemente führen dazu, dass das Strömungsmedium über einen mäanderförmigen Verlauf im Kühlkanal strömt. Die Strömung des Kühlmittels wird dadurch umgelenkt und abgebremst, was zu einer Erhöhung der Wärmeübertragung auf die Kühlkanalwand führt.

In einer vorteilhaften Weiterbildung sind die Strömungsmittel als Dimpels ausgeführt. Dimpels sind Ausnehmungen in der Kanalwand. Bekannt sind Dimpels beispielsweise aus dem Golfsport. Der Golfball weist keine glatte Oberfläche, sondern Ausnehmungen bzw. Vertiefungen auf der Oberfläche auf, die als Dimpels bezeichnet werden. Diese Dimpels verursachen eine Verwirbelung der Luft bzw. des Kühlmediums im Kühlkanal. Eine Verwirbelung führt zu einer Vergrößerung der Wärmeübertragung auf die Kühlkanalwand. Die Dimpels können dabei verschiedene geometrische Formen aufweisen. Beispielsweise kann der Dimpel eine kreisähnliche Struktur aufweisen. Es ist ebenso möglich, dass der Dimpel eine elliptische, dreieckige oder viereckige Struktur aufweist.

In einer weiteren vorteilhaften Weiterbildung weist das Strömungsmittel einen aus der Kühlkanalwand herausragenden Vorsprung auf. Der Vorsprung dient sozusagen als Barriere für das Kühlmedium. Das Kühlmedium wird durch den Vorsprung daran gehindert, in eine Strömungsrichtung ungebremst zu strömen. Der Vorsprung führt zu einer Erhöhung der Turbulenz des Strömungsmediums. Die Folge ist, dass die Wärmeübertragung auf die Kühlkanalwand erhöht wird. In einer weiteren vorteilhaften Weiterbildung weist der Vorsprung einen Distanzlängsvorsprung zur Distanzierung von zwei Kühlkanalwänden und daran angrenzende Turbulenzerhöhungsvorsprünge auf. Die Turbulenzerhöhungsvorsprünge weisen eine Turbulenzerhöhungswand auf, wobei ein im Betrieb auf die Turbulenzerhöhungsvorsprungswand aus einer Strömungsrichtung kommendes auftreffendes Kühlmedium unter einem Winkel von weniger als 90° auftrifft. Dieses Strömungsmittel ist daher senkrecht zur Strömungsrichtung aus gesehen V-förmig ausgebildet. Das Strömungsmedium wird daher nicht frontal durch die Turbulenzerhöhungsvorsprungswand abgebremst, sondern vielmehr unter einem Winkel von weniger als 90° reflektiert. Die Folge ist, dass die Strömungsgeschwindigkeit abnimmt, der Druck sich leicht erhöht und dadurch die Turbulenz vergrößert wird, was zu einer Erhöhung der Wärmeübertragung führt.

Vorteilhafterweise wird ein zweiter Turbulenzerhöhungsvorsprung am Distanzvorsprung angeordnet, so dass das Kühlmedium links und recht in Strömungsrichtung gesehen eine Turbulenzerhöhungsvorsprungswand vor sich hat und daran unter einem Winkel von weniger als 90° abgelenkt wird.

Die Erfindung wird anhand eines Ausführungsbeispiels näher erläutert.

### Es zeigen:

- Figur 1: einen Ausschnitt eines Rotors,
- Figur 2: eine schematische Ansicht eines Kühlkanals,
- Figur 3: eine Darstellung von verschiedenen Strömungsmitteln,
- Figur 4: eine Darstellung von verschiedenen Dimpels.

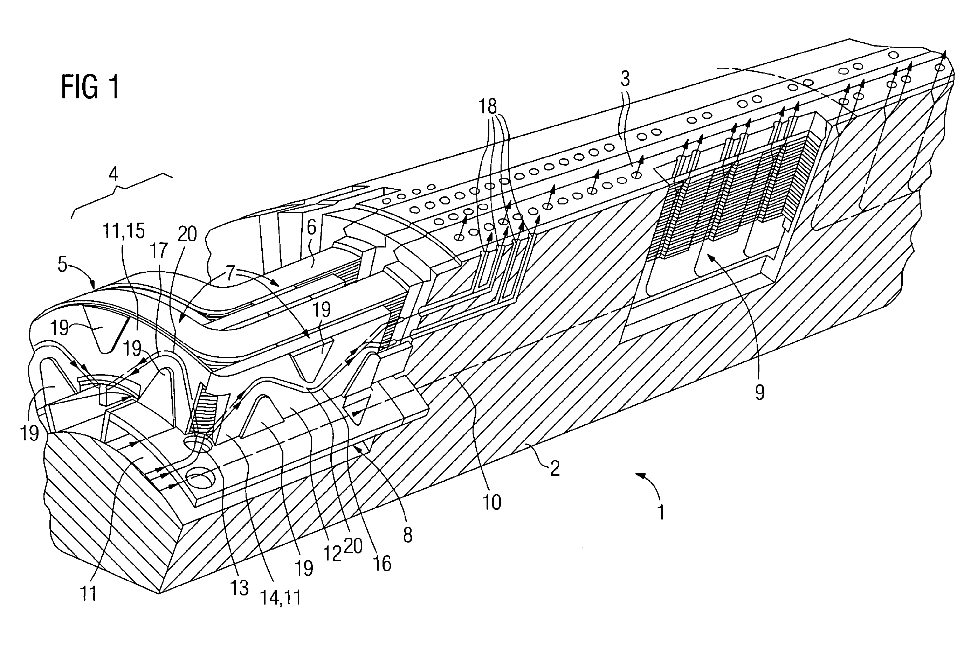

Die Figur 1 zeigt einen Ausschnitt eines Rotors 1 für eine dynamoelektrische Maschine. Der Rotor 1 umfasst einen um eine nicht näher dargestellte Rotationsachse drehbar gelagerten Läuferballen 2 sowie in Nuten angeordnete elektrische Leiter 3. Des Weiteren weist der Rotor 1 einen Wickelkopf 4 an einer stirnseitigen Seite auf. Der Wickelkopf 4 umfasst einen Wickelkopfquerleiter 5 und einen Wickelkopfaxialleiter 6. Im Betrieb rotiert der Rotor 1 mit einer Netzfrequenz von 50 Hz bzw. 60 Hz. Der Rotor 1 erwärmt sich hierbei und muss gekühlt werden.

Die einzelnen Wickelkopfleitungen, die aus einem Wickelkopfquerleiter 5 und einem Wickelkopfaxialleiter 6 bestehen, werden über Distanzelemente 7 beabstandet. Im Betrieb strömt ein Kühlmedium über einen nicht näher dargestellten Einlass unter einem Gasführungsmantel 8 entlang in einem Nutgrundkanal unter den elektrischen Leiter 3. Das Kühlmedium strömt anschließend über radiale Kühlkanäle 9 durch den elektrischen Leiter 3. Die Strömung des Kühlmediums wird symbolisch durch den Kühlströmungspfad 10 dargestellt.

Die Kühlung des Wickelkopfes 4 erfolgt folgendermaßen: die Distanzelemente 7 sind derart ausgebildet, dass zwischen zwei Wickelkopfleitern 5, 6 ein Kühlkanal 11 entsteht. Dieser Kühlkanal 11 wird durch Kühlkanalwände 12 begrenzt. Über einen Einlass 13 strömt das Kühlmedium in den Kühlkanal 11 und teilt sich hierbei in einen Axialleiterkühlkanal 14 und einen Querleiterkühlkanal 15 auf. Die Bewegung des durch den Axialleiterkühlkanal 14 strömenden Kühlmediums wird durch den Axialleiterkühlpfad 16 symbolisiert. Die Bewegung des durch den Querleiterkühlkanal 15 strömenden Kühlmediums wird durch den Querleiterkühlpfad 17 symbolisiert.

Das durch den Axialleiterkühlpfad 16 strömende Kühlungsmedium tritt anschließend über Axial-Radial-Bohrungen 18 aus dem elektrischen Leiter 3 heraus. Das durch den Querleiterkühlkanal 15 strömende Kühlmedium strömt unterhalb der elektrischen Leiter 3 in sogenannten Nutgrundkanälen und tritt anschließend über die radialen Kühlkanäle 9 heraus.

Im Kühlkanal 11 sind Umlenkungselemente 19, die dazu führen, dass das Kühlmedium einen mäanderförmigen Verlauf 20 aufweist. Die Kühlkanalwand 12 ist vorzugsweise eben ausgebildet. Zur Verbesserung der Wärmeübertragung des Kühlmediums auf die Kühlkanalwand 12 werden in der Figur 1 nicht sichtbare Strömungsmittel 21 angeordnet. Die Strömungsmittel 21 sind derart ausgebildet, dass sie zu einer Erhöhung der Wärmeübertragung eines im Betrieb durch den Kühlkanal strömenden Kühlmediums auf den Kühlkanal 11 führen.

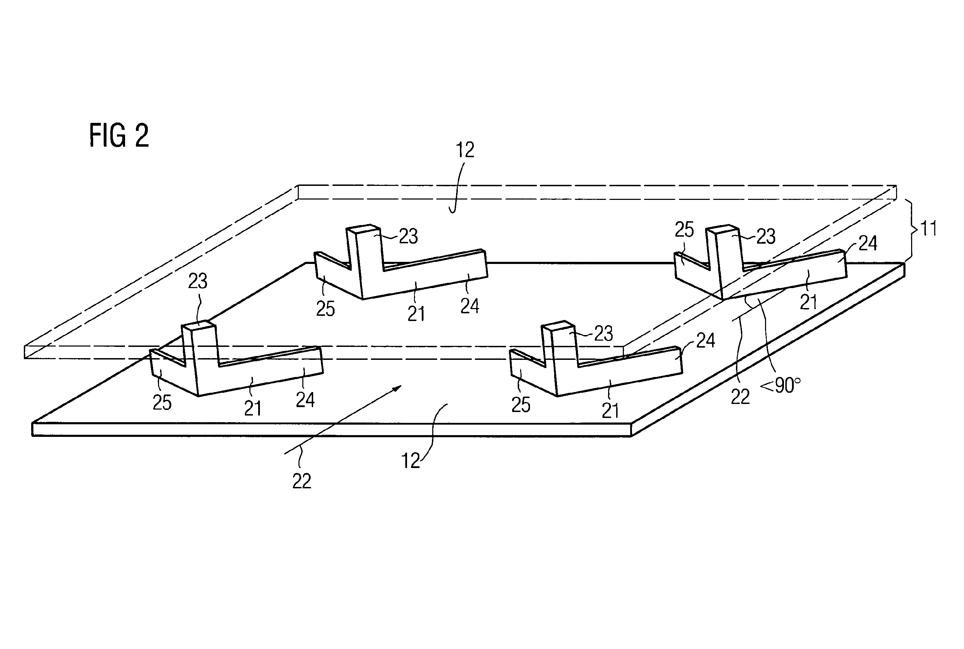

In der Figur 2 ist eine Ausführungsform des Strömungsmittels 21 dargestellt. Die Figur 2 zeigt einen Ausschnitt des Kühlkanals 11. Zwischen zwei Kühlkanalwänden 12 werden die Strömungsmittel 21 angeordnet. Ein aus einer Strömungsrichtung 22 kommendes Kühlmedium wird an diesen Strömungsmitteln umgelenkt. Durch die Ablenkung des Kühlmediums erfolgt eine Strömungsgeschwindigkeitsverringerung und dadurch eine Druckerhöhung des Kühlmediums, was zu einer verbesserten Wärmeübertragung auf die Kühlkanalwand 12 führt. Das Strömungsmittel 21 weist einen Distanzlängsvorsprung 23 auf, der zur Distanzierung der beiden Kühlkanalwände 12 dient. Des Weiteren dient der Distanzlängsvorsprung 23 zur Umlenkung bzw. Abbremsung des Kühlmediums und dadurch zur Erhöhung der Wärmeübertragung. Des Weiteren weist das Strömungsmittel 21 zwei an dem Distanzlängsvorsprung 23 angeordnete Turbulenzerhöhungsvorsprünge 24, 25 auf. Die Turbulenzerhöhungsvorsprünge 24, 25 weisen eine Turbulenzerhöhungsvorsprungswand auf, wobei auf die Turbulenzerhöhungsvorsprungswand ein im Betrieb aus der Strömungsrichtung 22 kommendes aufreffendes Kühlmedium unter einem Winkel von weniger als 90° auftrifft. Die beiden Turbulenzerhöhungsvorsprünge 24, 25 sind jeweils derart ausgebildet, dass ein Turbulenzerhöhungsvorsprung 24 rechts in der Strömungsrichtung 22 gesehen vom Distanzlängsvorsprung 23 und der Turbulenzerhöhungsvorsprung 25 links in Strömungsrichtung 22 gesehen vom Distanzlängsvorsprung 23 angeordnet sind.

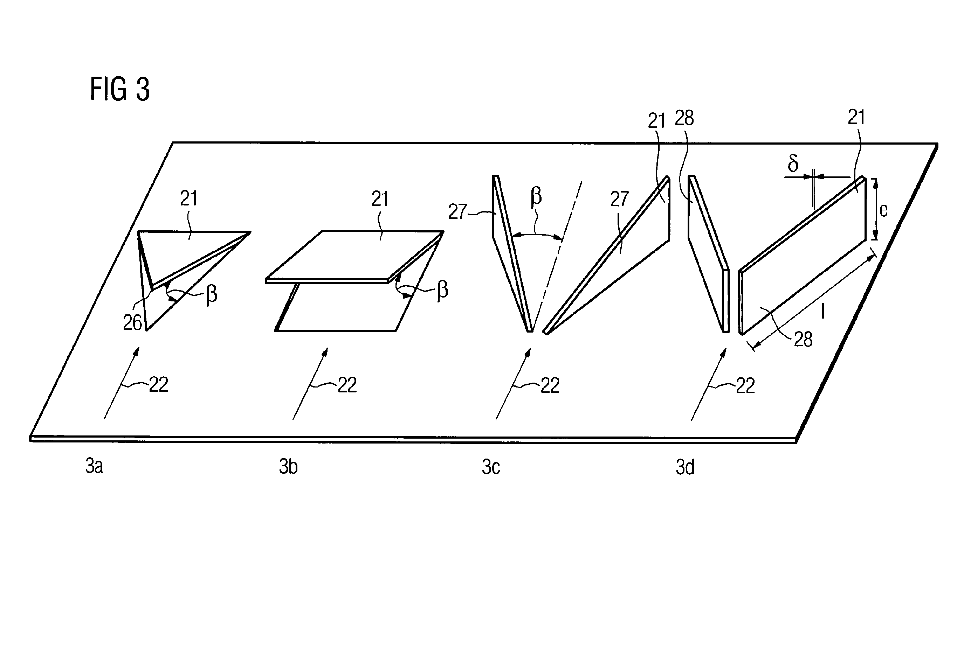

In der Figur 3 sind weitere alternative Ausführungsformen des Strömungsmittels 21 dargestellt. In der Ausführungsform gemäß Figur 3a ist das Strömungsmittel 21 mit einem dreieckförmigen Grundriss ausgebildet. Das aus der Strömungsrichtung 22 strömende Strömungsmedium wird an einer Spitze 26 des Dreieckes umgelenkt, was zu Verwirbelungen führt. Die in der Variante b dargestellte Möglichkeit ist durch einen nahezu quadratischen Querschnitt gekennzeichnet. Die in der Variante c dargestellte Möglichkeit ist durch zwei unter einem Winkel β zur Strömungsrichtung 22 gerichtete Dreiecke 27 gekennzeichnet. Die Ausführungsform gemäß Variante d ähnelt der Ausführungsform gemäß Variante c. Ein Unterschied zur Variante c besteht darin, dass statt der Dreiecke 27 zwei Rechtecke 28 verwendet werden.

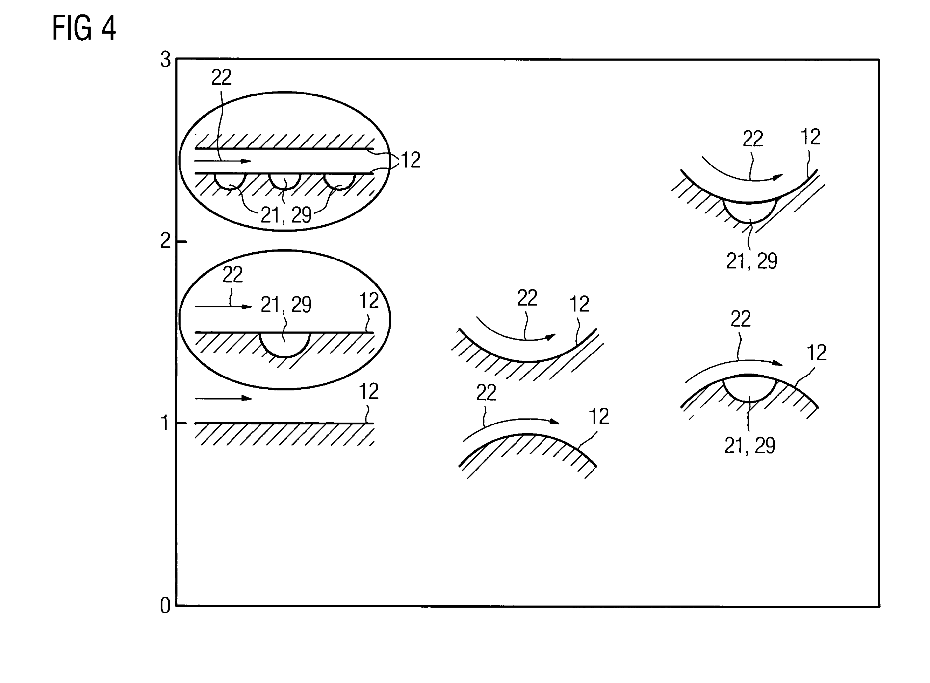

In der Figur 4 ist eine alternative Ausführungsform der Strömungsmittel 21 zu sehen, die sich grundsätzlich von den Strömungsmitteln 21 gemäß Figur 2 und Figur 3 unterscheiden. Der wesentliche Unterschied hierbei liegt darin, dass die Strömungsmittel 21 keine Vorsprünge sondern Vertiefungen 29 aufweisen. Solche Vertiefungen 29 sind beispielsweise bekannt aus dem Golfsport. Golfbälle weisen vergleichsweise ähnliche Vertiefungen 29 auf. Solche Vertiefungen 29, die auch als Dimpels bezeichnet werden können, führen zu einer Verwirbelung des aus der Strömungsrichtung 22 strömenden Kühlmediums. Diese Verwirbelung führt zu einer verbesserten Wärmeübertragung auf die Kühlwand. Die Folge ist, dass eine effektivere Kühlung des Rotors 1 möglich ist.

## Patentansprüche

1. Rotor für eine dynamoelektrische Maschine,
wobei der Rotor (1) Kühlkanäle (11) aufweist,
**dadurch gekennzeichnet, dass**
im Kühlkanal (11) Strömungsmittel (21) zur Erhöhung der Wärmeübertragung eines im Betrieb durch den Kühlkanal (11) strömenden Kühlmediums auf den Kühlkanal (11).

2. Rotor nach Anspruch 1,
wobei der Kühlkanal (11) durch Kühlkanalwände (12) begrenzt wird und die Strömungsmittel (21) an einer Kühlkanalwand (12) angeordnet sind.

3. Rotor nach Anspruch 2,
wobei die Kühlkanalwand (12) an einem elektrischen Leiter (3) angeordnet ist.

4. Rotor nach Anspruch 2 oder 3,
wobei die Kühlkanalwand (12) im Wesentlichen eben ausgebildet ist.

5. Rotor nach einem der vorhergehenden Ansprüche,
wobei der Rotor (1) einen Wickelkopf (4) umfasst und die Kühlkanäle (11) zur Kühlung des Wickelkopfes (4) angeordnet sind.

6. Rotor nach Anspruch 5,
wobei der Kühlkanal (11) einen ersten in axialer Richtung erstreckenden Axialleiterkühlkanal (14) und einen zweiten in Umfangsrichtung erstreckenden Querleiterkühlkanal (15) aufweist.

7. Rotor nach Anspruch 5 oder 6,
wobei Umlenkungselemente (19) im Kühlkanal (11) angeordnet
sind,
wobei die Umlenkungselemente (19) zum Umlenken der Strömungsrichtung (22) eines Kühlmediums ausgebildet sind.

8. Rotor nach Anspruch 7,
wobei der Kühlkanal (11) durch die Umlenkungselemente (19) einen mäanderförmigen Verlauf aufweist.

9. Rotor nach einem der vorhergehenden Ansprüche,
wobei die Strömungsmittel (21) als Dimpels ausgeführt sind.

10. Rotor nach einem der Ansprüche 1 bis 8,
wobei die Strömungsmittel (21) einen aus der Kühlkanalwand (12) herausragenden Vorsprung aufweist.

11. Rotor nach Anspruch 10,
wobei der Vorsprung einen Distanzlängsvorsprung (23) zur Distanzierung von zwei Kühlkanalwänden (12) und daran angrenzende Turbulenzerhöhungsvorsprünge (24) aufweist,
wobei die Turbulenzerhöhungsvorsprünge (24) eine Turbulenzerhöhungsvorsprungswand aufweisen,
wobei eine im Betrieb auf die Turbulenzerhöhungsvorsprungswand aus einer Strömungsrichtung (22) kommendes auftreffendes Kühlungsmedium unter einem Winkel von <90° auftrifft.

12. Rotor nach Anspruch 11,
wobei ein zweiter Turbulenzerhöhungsvorsprung (25) am Distanzvorsprung angeordnet ist.
